Europäisches Patentamt

(19) European Patent Office

Office européen des brevets

(11) Publication number: **0 444 940 A1**

## (12) EUROPEAN PATENT APPLICATION

(21) Application number: **91301667.1**

(22) Date of filing: **28.02.91**

(51) Int. Cl.⁵: **B60S 1/34**

(30) Priority: **01.03.90 GB 9004664**

(43) Date of publication of application:
**04.09.91 Bulletin 91/36**

(84) Designated Contracting States:
**BE DE ES FR IT**

(71) Applicant: **TRICO-FOLBERTH LIMITED**
**Great West Road**
**Brentford Middlesex TW8 9HP (GB)**

(72) Inventor: **Curtis, Martyn**
**3, Wayside Court**
**The Grove, Isleworth, Middlesex TW7 4JR (GB)**
Inventor: **Raymond, Christopher David**
**5, Bridge Way**
**Whitton, Middlesex TW2 7JL (GB)**

(74) Representative: **Pedder, James Cuthbert**
**J.C. Pedder & Co. 38 Norbury Cross**
**Norbury London SW16 4JQ (GB)**

(54) **Dual axis mechanism.**

(57) A dual axis mechanism comprises a shaft (7) mounted for rotation about a first axis (53), an inner circular bearing surface (55) mounted around the first shaft (7) and having its centre on a second axis (59), an outer circular bearing surface (63) cooperating with and running round the inner circular bearing surface (55) to form a bearing therewith and coupling means (67) associated with the outer bearing surface (63) for circular movement with the outer surface (63) about the second axis (59).

FIG.2

## DUAL AXIS MECHANISM

This invention relates to a dual axis mechanism which is particularly useful in the field of windscreen wipers.

There is a number of windscreen wiping applications which require a windscreen wiper blade not only to move over the windscreen in an arc but to vary its angular position relative to the wiper arm or other driving mechanism. This type of application ranges from the situation in which the wiper blade is to remain at the same angle with respect to the windscreen using a main driving wiper arm and a slave arm, known as a full pantograph mechanism, to situations in which the blade is required to change its angle both to the windscreen and to the driving mechanism, also of the two arm type and here known as a semi-pantograph mechanism. This type of mechanism is usually not difficult to implement, but there are circumstances when the geometry of the linkages and the desired angular movement of the blade mean that the spacing between the axis of the drive spindle of the main arm and the pivot axis of the slave arm are so small that the axis of the slave arm pivot would lie so close to the drive spindle axis that it would be impossible to implement. This is even more so where the position of the pivot axis would lie within the circumference of the drive spindle.

The present invention seeks to provide a dual axis mechanism in which the above problems of close juxtaposition of the two centres are obviated or substantially reduced.

According to the invention, there is provided a dual axis mechanism comprising a shaft mounted for rotation about a first axis, an inner circular bearing surface mounted around the first shaft and having its centre on a second axis, an outer circular bearing surface cooperating with and running round the inner circular bearing surface to form a bearing therewith and coupling means associated with the outer bearing surface for circular movement with the outer surface about the second axis.

Preferably the two bearing surfaces form the inner and outer races of a roller or needle bearing. The shaft may be mounted in a shaft bearing and the inner bearing surface may be mounted so as to lie around the shaft bearing. The position of the second axis may lie within the circumference of the shaft bearing or the shaft itself.

The bearing of the second axis may be movable around the shaft so as to vary the position of the second axis in relation to the first axis.

The shaft may be the drive shaft of a pantograph windscreen wiper system carrying the main arm thereof and the coupling means may be attached to the slave arm thereof in such a way as to be movable in an arc about the second axis.

The invention will now be described in greater detail, by way of example, with reference to the drawings in which:-

Figure 1 is a schematic plan view of a windscreen wiper installation of the semi-pantograph type incorporating a dual axis mechanism in accordance with the invention,;

Figure 2 is a plan view of dual axis mechanism in accordance with the invention, and

Figure 3 is a schematic view of a part of a windscreen showing the relative movement of the blade.

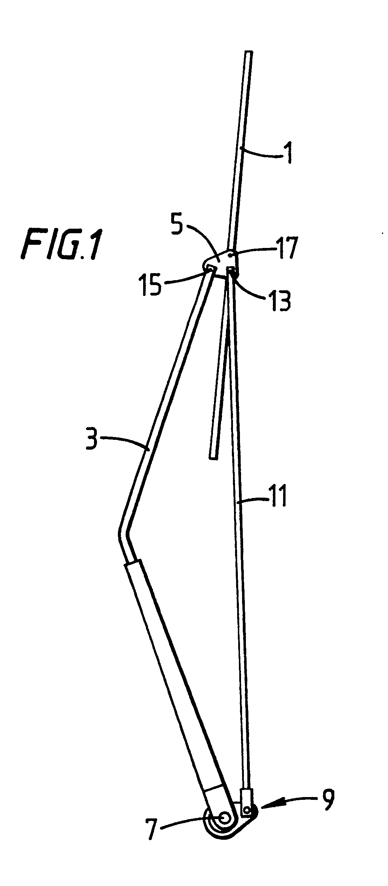

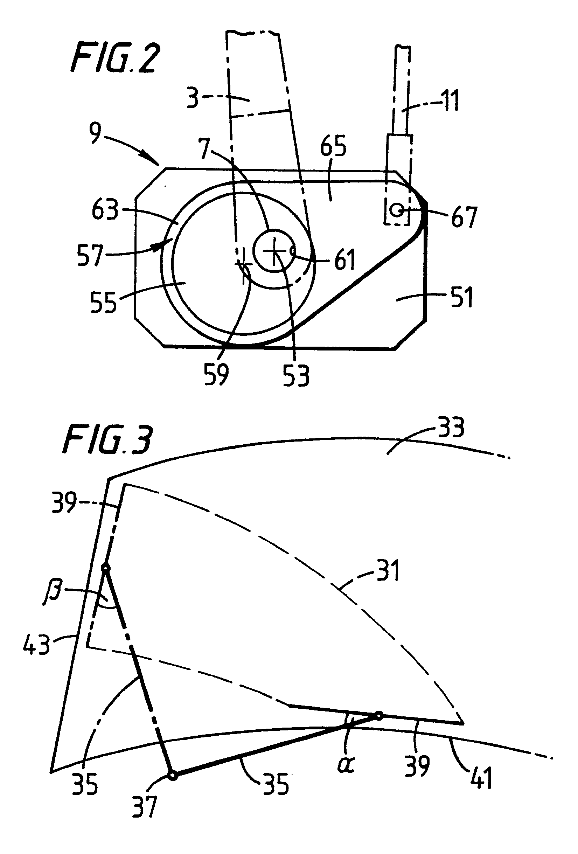

Referring firstly to Figure 1, there is shown a semi-pantograph windscreen wiper arrangement comprising a windscreen wiper blade 1 connected to a main wiper arm 3 by means of a connecting linkage 5. The main arm 3 is mounted on a drive shaft 7 which forms part of a dual axis mechanism 9 which will be described in greater detail hereafter with reference to figure 2. Also coupled between the connecting linkage 5 and the dual axis mechanism is a slave arm 11.

In operation of the arrangement shown in figure 1, the wiper arm 3 is driven backwards and forwards in an arc about the axis of the drive shaft 7 moving the linkage 5 therewith to move the wiper blade 1 also in an arc to wipe the windscreen. The slave arm 11 will follow the main arm 3 but, because its point of connection 13 to the linkage 5 is spaced from the point of connection 15 of the main arm 3, the linkage 5 will be caused to pivot about the connection point 15 and will pivot the wiper blade 1, which is mounted by connection point 17 fixedly therewith in the horizontal plane, to pivot about the connection point 15 also.

Thus, with suitably designed geometry, the blade can move in an wiping pattern such as that shown at 31 in figure 3. In figure 3, the windscreen is indicated at 33, the main arm of the pantograph drive mechanism at 35, the dual axis mechanism at 37 and the wiper blade at 39. Inspection of this figure will show that, relative to the main arm 35, the wiper blade 39 changes its angle from a small angle a at the lower edge 41 of the windscreen 33 to a larger angle β at the left hand side post 43 of the windscreen

Figure 2 shows the dual axis mechanism 9 in greater detail. The mechanism comprises a mounting plate 51 which is apertured to permit passage of the drive shaft 7 or to receive a bearing (not shown) for the drive shaft 7. The axis of the drive shaft is indicated at 53. Mounted eccentrically about the axis 53 is the stationary race 55 of a ball or roller bearing 57, the axis of which is indicated at 59. As can be seen, the race 55 is apertured at 61 to allow the passage of the drive shaft 7 and/or bearing. The spacing of the two axes 53 and 59 is only just larger than the diameter of the shaft 7 and/or bearing. The outer race of the bearing 57 is shown at 63 and has a radially enlarged part 65 carrying a coupling member 67 in the form of a short spigot. The slave arm 11 is non rotatably connected to the spigot 67 so that any movement of the arm 11 takes place about the axis 59. It is however mounted to allow up and down movement (into and out of the drawing sheet) to permit the wiper blade to follow the curvature of the windscreen.

It will be appreciated that various modifications and variations may be made to the above described embodiment without departing from the scope of the invention. For example, although the position of the second axis 59 is shown outside the circumference of the shaft 7 and/or bearing, it will be understood that this axis could, if required be within that circumference. The bearing 57 has been described as a ball or roller bearing, but could, if desired be purely a rubbing bearing.

Further more, for certain applications, the bearing 57 could be movable rotatably about the axis 53 to vary the relative position of the two axes.

While the invention has been described in relation to a windscreen wiper arrangement, it will be appreciated that the invention is not so limited and can equally well apply to any situation in which a two axis mechanism is required, particularly where the spacing between the axes is very small.

## Claims

1. A dual axis mechanism comprising a shaft (7) mounted for rotation about a first axis (53), an inner circular bearing surface (55) mounted around the shaft (7) characterised in that the inner circular bearing surface (55) has its centre on a second axis (59), an outer circular bearing surface (63) cooperates with and runs round the inner circular bearing surface (55) to form a bearing (57) therewith and coupling means (67) is associated with the outer bearing surface (63) for circular movement with the outer bearing surface (63) about the second axis (59).

2. A dual axis mechanism as claimed in claim 1, characterised in that the two bearing surfaces (55,63) form the inner and outer races of a roller or needle bearing.

3. A dual axis mechanism as claimed in claim 1 or 2, characterised in that the shaft (7) is mounted in a shaft bearing (61) and the inner bearing surface (55) is mounted so as to lie around the shaft bearing (61).

4. A dual axis mechanism as claimed in claim 1 or 2, characterised in that the position of the second axis (59) lies within the circumference of the shaft bearing (61).

5. A dual axis mechanism as claimed in claim 1 or 2, characterised in that the position of the second axis (59) lies within the circumference of the shaft (7) itself.

6. A dual axis mechanism as claimed in any one of the preceding claims, characterised in that the bearing of the second axis is movable around the shaft (7) so as to vary the position of the second axis (59) in relation to the first axis (53).

7. A dual axis mechanism as claimed in claim 1, characterised in that the shaft (7) is the drive shaft of a pantograph windscreen wiper system carrying the main arm (3) thereof and the coupling means (67) is attached to the slave arm (11) thereof in such a way as to be movable in an arc about the second axis (59).

FIG.1

FIG.2

FIG.3

European Patent Office

**EUROPEAN SEARCH REPORT**

Application Number

EP 91 30 1667

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2189686 (FISTER)<br>* page 1, lines 89 - 106; figure 3 * | 1, 3-7 | B60S1/34 |
| X | US-A-4716612 (D'ALBA)<br>* column 3, lines 15 - 57 * | 1, 3, 6, 7 | |

TECHNICAL FIELDS SEARCHED (Int. Cl.5)

B60S

The present search report has been drawn up for all claims

| Place of search | Date of completion of the search | Examiner |
|---|---|---|
| BERLIN | 06 JUNE 1991 | STANDRING, M |